# EUROPÄISCHE PATENTSCHRIFT

(11) **EP 1 596 003 B1**
(45) Veröffentlichungstag und Bekanntmachung des Hinweises auf die Patenterteilung: **09.08.2006**
(21) Anmeldenummer: 04011469.6
(22) Anmeldetag: 14.05.2004
(51) Int. Cl.: D21H 19/82, C09D 7/12

(54) **Beschichtung zur Erhöhung der Umlauffähigkeit von Dataträgern**
Coating for increasing the circulation resistance of data carriers
Enduction pour améliorer la résistance à la circulation de supports de données

(43) Veröffentlichungstag der Anmeldung: 16.11.2005
(73) Patentinhaber: Hueck Folien Gesellschaft m.b.H., 4342 Baumgartenberg (AT)
(72) Erfinder: Kammerer, Hans Hermann, 42637 Weiden (DE); Kastner, Friedrich, 4710 Grieskirchen (AT)
(74) Vertreter: Landgraf, Elvira

(56) Entgegenhaltungen:
- WO-A-00/00697
- WO-A-02/20902
- WO-A-91/12372
- GB-A- 2 241 966

## Beschreibung

Die Erfindung betrifft eine Beschichtungszusammensetzung für zellstoffhaltiges oder zellstofffreies Wert- und/oder Banknotenpapier, Papier mit thermoaktivierbarer Beschichtung und Datenträger beispielsweise aus Kunststoff, sowie mit dieser Beschichtungszusammensetzung versehenes Wert- und/oder Banknotenpapier und/oder Papier mit thermoaktiverbarer Beschichtung und/oder Datenträger sowie ein Verfahren zur Herstellung eines derartig beschichteten Wert- und/oder Banknotenpapiers und/oder Datenträgers.

Banknoten bestehen üblicherweise aus zellstofffreiem Papier, andere Wertpapiere werden aus zellstoffhaltigem Papier oder Papier mit thermoaktivierbarer Beschichtung hergestellt, Datenträger, wie z.B. Kredit- und Ausweiskarten bestehen oft aus Kunststoff.
All diese Wertdokumente weisen in ihrem Aufbau Sicherheitselemente, sei es in Form von Wasserzeichen, Melierfasern oder eingebetteten oder aufgebrachten Sicherheitsfäden, -bändem oder anderen Formaten auf, wobei diese Sicherheitselemente, insbesondere wenn sie auf das Dokument aufgebracht werden, einer besonderen Beanspruchung ausgesetzt sind.

Aber auch die Oberfläche dieser Datenträger und Wertdokumente, wie Banknoten, Karten, Ausweispapiere und dergleichen ist durch ihren häufigen Gebrauch einer besonderen Abnutzung ausgesetzt.

Zur Vermeidung der durch den Gebrauch bedingten Abnutzung von Banknoten wurde in der AU 488,652 bereits vorgeschlagen, diese aus Kunststoff zu fertigen. Zwar können auch in Kunststoffsubstrate Sicherheitselemente eingebettet bzw. aufgebracht werden, doch sind auch Kunststoffoberflächen einem Verschleiß durch häufigen Gebrauch ausgesetzt.

In der WO 00/00697 wird eine Oberflächenbeschichtung für zellstofffreies Banknotenpapier vorgeschlagen, die eine erhöhte Umlauffähigkeit gewährleisten soll und die lediglich ein Bindemittel und keine Füllstoffe enthält. Diese Oberflächenbeschichtung ist für zellstofffreies Papier, wie Banknotenpapier geeignet, für die Beschichtung von Kunststoffoberflächen, wie z.B. von Wert- oder Kreditkarten und dergleichen oder von Papier mit thermoaktivierbarer Beschichtung ist eine derartige Beschichtung nicht vorgesehen.
Femer ermöglicht die in der WO 00/00697 beschriebene Oberflächenbeschichtung zwar eine erhöhte Umlauffähigkeit von Banknoten, jedoch ohne Berücksichtigung der Verschmutzung dieser Banknoten durch den häufigen Gebrauch.

Aufgabe der Erfindung war daher die Bereitstellung einer Zusammensetzung für eine Oberflächenbeschichtung für zellstofffreies oder zellstoffhaltiges Papier, für Papier mit thermoaktivierbarer Beschichtung oder für Kunststoffe, die in jedem bekannten Druckverfahren oder Beschichtungsverfahren partiell oder vollflächig aufgebracht werden kann, wobei diese Oberflächenbeschichtung zur Erhaltung der Papiereigenschaften dient, schmutzabweisend ist, eine erhöhte Umlauffähigkeit der beschichteten Substrate gewährleistet und auch bedruckbar ist.

Gegenstand der Erfindung ist daher eine Zusammensetzung für eine Oberflächenbeschichtung von zellstofffreiem, zellstoffhaltigem Papier, Papier mit thermoaktivierbarer Beschichtung und/oder Kunststoffsubstraten, dadurch gekennzeichnet, dass die Oberflächenbeschichtungszusammensetzung auf Basis von Acryl-Polymerdispersionen oder Acryl-Styrol-Polymerdispersionen oder Polyurethandispersionen oder Polyesteracrylat aufgebaut ist, wobei Acryl-Polymerdispersionen oder Acryl-Styrol- Polymerdispersionen eine T_{g} von -20 - +100°C und eine MFT von 0 - 100°C aufweisen und die Zusammensetzung zusätzlich ein Polyimin enthält und die Oberflächenbeschichtungszusammensetzung in mindestens zwei Schichten aufgetragen wird, wobei die Viskosität der Oberflächenbeschichtungszusammensetzung zwischen 25 und 500 mPa.sec beträgt und in den einzelnen Schichten unterschiedlich sein kann.

In einer besonderen Zusammensetzung kann die erfindungsgemäße Oberflächenbeschichtungszusammensetzung auch eine reaktive Komponente, beispielsweise eine organische Verbindung mit endständigen Hydroxalgruppen, wie beispielsweise ein Polyesterpolyole mit einem Hydroylgehalt > etwa 3% enthalten.

Die erfindungsgemäße Zusammensetzung zeichnet sich insbesondere dadurch aus, dass sie zur Aufbringung auf jedes Substrat, insbesondere auf z.B. auf zellstofffreies als auch auf zellstoffhaltiges Papier und auf Kunststoff geeignet ist.
Die Basisdispersionen weisen vorzugsweise eine T_{g} von -20 - 100°C und eine MFT 0 - 100°C auf.

Die erfindungsgemäße Zusammensetzung enthält 0,1 - 20 Gew% eines Polyimins, besonders bevorzugt 0,5 - 5 Gew%. Durch den Gehalt an Polyimin wird eine Teilvernetzung der Zusammensetzung bei der Applikation bewirkt, wodurch einerseits die Oberfläche des so beschichteten Substrats geschützt wird, andererseits auch die Bedruckbarkeit der Oberfläche erhalten wird.
Femer kann die erfindungsgemäße Zusammensetzung strahlungshärtend sein, beispielsweise durch Wärme- oder vorzugsweise durch UV-Strahlung, wobei zur UV-Härtung vorzugsweise Mitteldruck-Hg-Lampen oder dotierte Hg/Ga-, Hg/Wo- oder Hg/Fe-Lampen besonders geeignet sind.

Femer kann die erfindungsgemäße Oberflächenbeschichtung noch ein Lösungsmittel, beispielsweise Wasser oder Alkohole, beispielsweise C₁ bis C₈-Alkohole wie Methanol, Ethanol, i- Propanol, Butanole und dergleichen oder Glykolether oder eine Mischung von Alkoholen mit Wasser enthalten, wobei der Anteil an Lösungsmittel bis zu 50 % betragen kann.

Je nach Anteil des Lösungsmittels kann die Filmbildungstemperatur variiert werden. Je höher der Lösungsmittelanteil, desto niedriger ist die Filmbildungstemperatur. Im Allgemeinen liegt die Filmbildungstemperatur der erfindungsgemäßen Zusammensetzungen in Abhängigkeit vom Lösungsmittelgehalt zwischen - 10° und 100°C.

Die Viskosität der erfindungsgemäßen Oberflächenbeschichtungszusammensetzung beträgt 25 - 500 mPa.sec.
Die Einstellung der gewünschten Viskosität erfolgt zweckmäßigerweise durch Anpassung des Lösungsmittelanteils. Vorzugsweise wird als Lösungsmittel Waser/IPA im Verhältnis 1:1 verwendet.
Die Viskosität kann insbesondere auch je nach verwendetem Auftragsverfahren spezifisch angepasst werden.
Insbesondere bei der Auftragung in mehreren Schichten können die einzelnen Schichten unterschiedliche Viskositäten aufweisen, wobei auch unterschiedliche Auftragsgewichte vorteilhafterweise verwendet werden können

Besonders vorteilhaft ist es, in einem ersten Auftrag beispielsweise auf ein saugfähiges Substrat, wie Papier, Vlies und dergleichen, in einer ersten Schicht, eine erfindungsgemäße Beschichtungszusammensetzung mit einer Viskosität von 20 - 70 mPa.sec und einem Auftragsgewicht von 0,25 -0,75 g/m² aufzubringen.
Dadurch wird die Saugfähigkeit des ggf. beschichteten Substrats verringert.
In einer zweiten Schicht wird anschließend eine erfindungsgemäße Oberflächenbeschichtungszusammensetzung mit einer Viskosität von 300-500 mPa.sec aufgebracht, wobei das Auftragsgewicht hier etwa 1 - 2 g/m² betragen kann. Dadurch wird der Schutz des ggf. beschichteten Substrats gegen chemische, physikalische und/oder mechanische Einflüsse verbessert, ohne die Detektierbarkeit einer etwaig auf dem Substrat vorhandenen funktionellen Beschichtung zu beeinträchtigen.

In einer weiteren Ausführungsform kann die erfindungsgemäße Oberflächenbeschichtungszusammensetzung mit einer Viskosität von 200 bis 450 mPa.sec und einem Auftragsgewicht von etwa 1.2 - 1.7 g/m² aufgebracht werden.
Auch hier wird durch den ersten Auftrag, falls notwendig, vorerst die Saugfähigkeit des ggf. beschichteten Substrats vermindert. Für nur beschränkt saugfähige Substrate wird durch den ersten Aufstrich eine innige Verbindung der Oberflächenbeschichtungszusammensetzung mit dem Substrat t und ein Schutz vor chemischen mechanischen und/oder physikalischen Einflüssen erreicht.

Durch den weiteren Auftrag der Oberflächenbeschichtungszusammensetzung wird ein überlegener Schutz des Substrats vor chemischen, physikalischen und/oder mechanischen Einflüssen erreicht wird ohne die Detektierbarkeit der auf dem Substrat vorhandenen funktionellen Beschichtungen zu beeinträchtigen.

In einer weiteren Ausführungsform können auch drei oder mehrere Schichten auf das ggf. beschichtete Substrat aufgebracht werden, wobei dabei die Viskosität der erfindungsgemäßen Oberflächenbeschichtungszusammensetzung vorteilhafterweise zwischen 80 - 220 mPa.sec liegt bei einem Auftragsgewicht von etwa 0.6 - 0.9 g/m².

Das Übertragungsraster wird dabei in Abhängigkeit von der Viskosität gewählt, wobei bei niedriger Viskosität das Schöpfvolumen des Übertragungsrasters geringer gewählt wird.

Die jeweils in den verschiedenen Schichten aufgetragenen Oberflächenbeschichtungszusammensetzungen können gleiche oder unterschiedliche Zusammensetzungen aufweise, insbesondere gleiche oder unterschiedliche Basiskomponenten und/oder Additive.

In einer besonderen Ausführungsform kann die Oberflächenbeschichtungszusammensetzung wie bereits beschrieben eine Verbindung mit endständigen Hydroxylgruppen aufweisen. Dann kann vorteilhafterweise das mit der Oberflächenbeschichtungszusammensetzung zu beschichtende Substrat eine reaktive Komponente, die mit der reaktiven Hydroxylgruppen enthaltenden Komponente der Oberflächenbeschichtungszusammensetzung reagiert enthalten. Diese reaktive Komponente kann auch in einer bereits auf dem Substrat befindlichen Beschichtung vorhanden sein. Beispiel für eine derartige reaktive Komponente sind beispielsweise Isocyanate.
Bei Aufbringung der Oberflächenbeschichtung reagiert die reaktive Komponente der Beschichtungszusammensetzung dann mit der reaktiven Komponente auf dem Substrat, wobei eine verbesserte Haftung und eine verbesserte Schutzfunktion erreicht wird.

Das beschriebene Mehrschichtauftragsverfahren bewirkt ein glatteres Liegen der Lackierung und eine höhere Dichtigkeit.

Die erfindungsgemäße Oberflächenbeschichtung kann in jedem bekannten Lackier- oder Druck- oder Beschichtungsverfahren, beispielsweise im Siebdruck- Tiefdruck, Flexodruck-, Beschichtungsverfahren, bzw. vorzugsweise im Glattwalzenverfahren oder im Raster- oder Linienrasterverfahren jeweils mit Mit- oder Gegenlauf, durch Slot-Eye oder Curtain Coating -Verfahren oder durch Aufstreichen, Sprühen und dergleichen aufgebracht werden.
Vorzugsweise wird die erfindungsgemäße Oberflächenbeschichtungszusammensetzung temperaturkontrolliert, auf das über gekühlte oder beheizte Walzen geführte Substrat aufgebracht.

Die erfindungsgemäße Beschichtungszusammensetzung verleiht dem mit ihr beschichteten Substrat erhöhte Umlauffähigkeit.

Sie verringert gegebenenfalls die Saugfähigkeit des Trägersubstrats und ist insbesondere auch schmutzabweisend.

Die erfindungsgemäße Beschichtung kann femer in einem beliebigen Druck- oder Beschichtungsverfahren mit weiteren Schichten vollflächig oder partiell bedruckt werden und sie kann gegebenenfalls auch mit einer Oberflächenstruktur versehen werden.

Als Substrate kommen neben zellstofffreiem Papier oder zellstoffhaltigem Papier auch alle auf Kunststoff basierenden Substrate, wie beispielsweise aus PI, PP, MOPP, PE, PPS, PEEK, PEK, PEI, PSU, PAEK, LCP, PEN, PBT, PET, PA, PC, COC, POM, ABS, PVC in Frage.

Femer können als Substrat auch Metallfolien, beispielsweise Al-, Cu-, Sn-, Ni-, Fe- oder Edelstahlfolien dienen. Die Folien können auch oberflächenbehandelt, beschichtet oder kaschiert beispielsweise mit Kunststoffen oder lackiert sein.

Ferner können als Substrate textile Materialien wie Gewebe oder Vliese, wie Endlosfaservliese, Stapelfaservliese und dergleichen, die gegebenenfalls vernadelt oder kalandriert sein können, verwendet werden. Vorzugsweise bestehen solche Gewebe oder Vliese aus Kunststoffen, wie PP, PET, PA, PPS und dergleichen, es können aber auch Gewebe oder Vliese aus natürlichen, gegebenenfalls behandelten Fasem, wie Viskosefaser-, Hanf- oder Kenafvliese und -gewebe bzw. deren Mischungen mit Kunststofffasem eingesetzt werden.

Ferner können die Substrate bereits mit einer oder mehreren Farb- und/oder Lackschichten versehen sein oder auch eingebettete oder mittels eines Heiß- oder Kaltsiegelklebers oder Selbstklebers aufgebrachte Bestandteile, insbesondere Sicherheitselemente aller Art und Formate aufweisen.

Die erfindungsgemäße Oberflächenbeschichtung zeichnet sich unter anderem auch dadurch aus, dass sie mit den im folgenden beschriebenen Farb- und/oder Lackschichten, die auch auf dem Substrat vorhanden sein können, bedruckt werden kann. Femer ist es auch möglich die Oberflächenbeschichtung durch bekannte Prägeverfahren mit einer Oberflächenstruktur, beispielsweise einer Mikrostruktur, einer Diffraktionsstruktur, einer Hologrammstruktur oder einer Reliefstruktur zu versehen, wobei diese Strukturen auch bereits auf dem Substrat vorhanden sein können.

Als Farb- bzw. Lackschichten können jeweils verschiedenste Zusammensetzungen verwendet werden. Die Zusammensetzung der einzelnen Schichten kann insbesondere nach deren Aufgabe variieren, also ob die einzelnen Schichten ausschließlich Dekorationszwecken dienen oder eine funktionelle Schicht darstellen sollen oder ob die Schicht sowohl eine Dekorations- als auch eine Funktionsschicht sein soll.

Die aufgedruckten Schichten können pigmentiert oder nicht pigmentiert sein. Als Pigmente können alle bekannten Pigmente, beispielsweise Pigmente auf anorganischer Basis wie Titandioxid, Zinksulfid, Kaolin, Bariumsulfat, ATO, FTO, Aluminium, Chrom- und Siliciumoxide, oder Pigmente auf organischer Basis, wie Phthalocyaninblau, i-Indolidingelb, Dioxazinviolett und dergleichen als auch farbige und/oder verkapselte Pigmente in chemisch, physikalisch oder reaktiv trocknenden Bindemittelsystemen verwendet werden. Als Farbstoffe kommen beispielsweise 1,1- oder 1,2- Chrom-Cobalt-Komplexe in Frage.
Dabei sind lösungsmittelhaltige Farben- und/oder Lacksysteme, wässrige und auch lösungsmittelfreie Lacksysteme verwendbar.

Als Bindemittel kommen verschiedene natürliche oder synthetische Bindemittel in Frage, wie z.B. natürliche Öle und Harze, wie Phenolformaldehyd, Harnstoff-, Melamin-, Keton-, Aldehyd-, Epoxy-, Polyterpenharze. Als zusätzliche Bindemittel können beispielsweise Polyester, Polyvinylakohole, Polyvinylacetate, - ether, -propionate und -chloride, Poly(methyl)acrylate, Polystyrole, Olefine, Nitrocellulose, Polyisocyanat, Urethansysteme verwendet werden.

Die funktionellen Schichten beispielsweise können bestimmte elektrische, magnetische, chemische, physikalische und auch optische Eigenschaften aufweisen.

Zur Einstellung elektrischer Eigenschaften, beispielsweise Leitfähigkeit können beispielsweise Graphit, Ruß, leitfähige organische oder anorganische Polymere, Metallpigmente (beispielsweise Kupfer, Aluminium, Silber, Gold, Eisen, Chrom und dergleichen), Metalllegierungen wie Kupfer-Zink oder Kupfer-Aluminium oder auch amorphe oder kristalline keramische Pigmente wie ITO, ATO und dergleichen zugegeben werden. Weiters können auch dotierte oder nicht dotierte Halbleiter wie beispielsweise Silicium, Germanium, Galliumarsenid, Selen oder Ionenleiter wie amorphe oder kristalline Metalloxide oder Metallsulfide als Zusatz verwendet werden. Femer können zur Einstellung der elektrischen Eigenschaften der Schicht polare oder teilweise polare Verbindungen, wie Tenside oder unpolare Verbindungen wie Silikonadditive oder hygroskopische oder nicht hygroskopische Salze verwendet oder zugesetzt werden. Ebenso können intrinsisch leitfähige organische Polymere wie Polyanilin, Polyacetylen, Polyethylendioxythiophen und/oder Polystyrolsulfonat zugesetzt werden.

Zur Einstellung der magnetischen Eigenschaften können paramagnetische, diamagnetische und auch ferromagnetische Stoffe, wie Eisen, Nickel, Barium, und Cobalt oder deren Verbindungen oder Salze (beispielsweise Oxide oder Sulfide) verwendet werden. Besonders geeignet sind Fe(II)- und Fe(III)oxide, Barium- bzw. Cobaltferrite, seltene Erden und dergleichen.

Die optischen Eigenschaften der Schicht lassen sich durch sichtbare Farben bzw. Pigmente, lumineszierende Farbstoffe bzw. Pigmente, die im sichtbaren, im UV-Bereich oder im IR-Bereich fluoreszieren oder phosphoreszieren, wärmeempfindliche Farben bzw. Pigmente, Effektpigmente, wie Flüssigkristalle, Perlglanz-, Bronzen und/oder Multilayer-Farbumschlagspigmente beeinflussen. Diese sind in allen möglichen Kombinationen einsetzbar.

Es können auch verschiedene Eigenschaften durch Zufügen verschiedener oben genannter Zusätze kombiniert werden. So ist es möglich angefärbte und/oder leitfähige Magnetpigmente zu verwenden. Dabei sind alle genannten leitfähigen Zusätze verwendbar.

Speziell zum Anfärben von Magnetpigmenten lassen sich alle bekannten löslichen und nicht löslichen Farbstoffe bzw. Pigmente verwenden. So kann beispielsweise eine braune Magnetfarbe durch Zugabe von Metallen in ihrem Farbton metallisch, beispielsweise silbrig eingestellt werden.

Die erfindungsgemäße Oberflächenbeschichtungszusammensetzung ist insbesondere zum Auftrag auf saugfähige Substrate, wie Papiere, Vliese, Gewebe und dergleichen aber auch zum Auftrag auf weniger saugfähige Substrate wie Kunststoffsubstrate oder metallische Substrate geeignet..

### Beispiel 1:

Eine Oberflächenbeschichtung folgender Zusammensetzung

| | |
|---|---|
| Acrylatdispersion (AVECIA; NeoCryl A 1052) | 60 Gew% |
| Wasser | 20 Gew% |
| i-Propanol | 17 Gew% |
| Polyimin (AVECIA Cross Linker CX 100) | 3 Gew% |

wird auf ein Banknotenpapier beidseitig in einem Flexodruckverfahren in 2 Schichten aufgebracht. Das so beschichtete Banknotenpapier ist schmutzabweisend und kann anschließend bedruckt werden.

### Beispiel 2:

| | |
|---|---|
| Acrylatdispersion (Trüb AG, Tecryl) | 70 Gew% |
| Wasser | 15 Gew% |
| i-Propanol | 15 Gew% |
| Polyimin (AVECIA Cross Linker CX 100) | 4 Gew% |

Die oben angegebene Zusammensetzung wird auf ein Banknotenpapier in drei Schichten aufgebracht und anschließend wird das Banknotenpapier bedruckt.

## Patentansprüche

1. Zusammensetzung für eine Oberflächenbeschichtung von zellstofffreiem, zellstoffhaltigem Papier, Papier mit thermoaktivierbarer Beschichtung und/oder Kunststoffsubstraten, **dadurch gekennzeichnet, dass** die Oberflächenbeschichtungszusammensetzung auf Basis von Acryl-Polymerdispersionen oder Acryl-Styrol- Polymerdispersionen oder Polyurethandispersionen oder Polyesteracrylat aufgebaut ist, wobei Acryl-Polymerdispersionen oder Acryl-Styrol- Polymerdispersionen eine T_{g} von -20 - +100°C und eine MFT von 0 - 100°C aufweisen und die Zusammensetzung zusätzlich ein Polyimin enthält und die Oberflächenbeschichtungszusammensetzung in mindestens zwei Schichten aufgetragen wird, wobei die Viskosität der Oberflächenbeschichtungszusammensetzung zwischen 25 und 500 mPa.sec beträgt und in den einzelnen Schichten unterschiedlich sein kann.

2. Zusammensetzung nach Anspruch 1, **dadurch gekennzeichnet, dass** die die Oberflächenbeschichtungszusammensetzung auf Basis von anionischen Acryl-Polymerdispersionen oder Acryl-Styrol-Polymerdispersionen oder Polyurethandispersionen oder Polyesteracrylat aufgebaut ist.

3. Zusammensetzung nach Anspruch 1 oder 2, **dadurch gekennzeichnet, dass** die Zusammensetzung 0,1 - 20 Gew% des Polyimins enthält.

4. Zusammensetzung nach einem der Ansprüche 1 bis 3, **dadurch gekennzeichnet, dass** die Zusammensetzung eine Verbindung mit endständigen Hydroxylgruppen enthält.

5. Zusammensetzung nach einem der Ansprüche 1 bis 4, **dadurch gekennzeichnet, dass** die Zusammensetzung strahlungshärtend, insbesondere UV-härtend ist.

6. Zusammensetzung nach einem der Ansprüche 1 bis 5, **dadurch gekennzeichnet, dass** sie mit weiteren Farb- und/oder Lackschichten bedruckbar ist und/oder mit einer Oberflächenstruktur versehen werden kann.

7. Zusammensetzung nach einem der Ansprüche 1 bis 6, **dadurch gekennzeichnet, dass** sie auf zellstofffreies oder zellstoffhaltiges Papier, auf Papier mit thermoaktivierbarer Beschichtung, auf Kunststoffsubstrate, auf Metallsubstrate, auf Vliese oder Gewebe in jedem beliebigen Lackier-, Beschichtungs- oder Druckverfahren auf ein Substrat aufgebracht werden kann.

8. Zusammensetzung nach einem der Ansprüche 3 bis 7, **dadurch gekennzeichnet, dass** sie auf ein Substrat, das eine reaktive Komponente enthält oder mit einer Beschichtung, die eine reaktive Komponente enthält aufgebracht werden kann.

9. Wert-, Banknotenpapier, Papier mit thermoaktivierbarer Beschichtung, Kunststoffsubstrate oder Metallsubstrate versehen mit zwei oder mehreren Schichten einer Zusammensetzung nach einem der Ansprüche 1 bis 8.

10. Wert- oder Banknotenpapier, Papier mit thermoaktivierbarer Beschichtung, Kunststoff- oder Metallsubstrate nach Anspruch 9, **dadurch gekennzeichnet, dass** die einzelnen Schichten der Zusammensetzung gleiche oder unterschiedliche Zusammensetzung aufweisen.

11. Wert-, Banknotenpapier, Papier mit thermoaktivierbarer Beschichtung, Kunststoffsubstrate oder Metallsubstrate nach einem der Ansprüche 9 oder 10, **dadurch gekennzeichnet, dass** das Wert- oder Banknotenpapier oder Kunststoffsubstrat eingebettete oder aufgebrachte Sicherheitsmerkmale aufweist.

12. Wert-, Banknotenpapier, Papier mit thermoaktivierbarer Beschichtung, Kunststoffsubstrate oder Metallsubstrate nach einem der Ansprüche 9 oder 11, **dadurch gekennzeichnet, dass** die Oberflächenbeschichtung mit weiteren Farb- und/oder Lackschichten bedruckbar ist und/oder mit einer Oberflächenstruktur versehen ist.

## Claims

1. Composition for a surface coating of cellulose-free, cellulose-containing paper, paper with a thermally activated coating and/or plastic substrates, **characterized in that** the surface coating composition is built up on the basis of acryl polymer dispersions or acryl-styrene polymer dispersions or polyurethane dispersions or polyester acrylate, acryl polymer dispersions or acryl-styrene polymer dispersions having a Tg of -20 - +100°C and an MFT of 0 - 100°C, and the composition additionally containing a polyimine and the surface coating composition being applied in at least two layers, it being possible for the viscosity of the surface coating composition to be between 25 and 500 mPa.sec and to be different in the individual layers.

2. Composition according to Claim 1, **characterized in that** the surface coating composition is built up on the basis of anionic acryl polymer dispersions or acryl-styrene polymer dispersions or polyurethane dispersions or polyester acrylate.

3. Composition according to Claim 1 or 2, **characterized in that** the composition contains 0.1 - 20% by weight of the polyimine.

4. Composition according to one of Claims 1 to 3, **characterized in that** the composition contains a compound with terminating hydroxyl groups.

5. Composition according to one of Claims 1 to 4, **characterized in that** the composition is radiation-curing, in particular UV-curing.

6. Composition according to one of Claims 1 to 5, **characterized in that** it can be printed with further ink and/or varnish layers and/or can be provided with a surface structure.

7. Composition according to one of Claims 1 to 6, **characterized in that** it can be applied to a substrate on cellulose-free or cellulose-containing paper, on paper with a thermally activated coating, on plastic substrates, on metal substrates, on nonwovens or wovens in any desired varnishing, coating or printing process.

8. Composition according to one of Claims 3 to 7, **characterized in that** it can be applied to a substrate which contains a reactive component or with a coating which contains a reactive component.

9. Security paper, banknote paper, paper with a thermally activated coating, plastic substrates or metal substrates provided with two or more layers of a composition according to one of Claims 1 to 8.

10. Security or banknote paper, paper with a thermally activated coating, plastic or metal substrates according to Claim 9, **characterized in that** the individual layers of the composition have the same or different composition.

11. Security paper, banknote paper, paper with a thermally activated coating, plastic substrates or metal substrates according to either of Claims 9 and 10, **characterized in that** the security paper or banknote paper or plastic substrate has embedded or applied security features.

12. Security paper, banknote paper, paper with a thermally activated coating, plastic substrates or metal substrates according to either of Claims 9 and 11, **characterized in that** the surface coating can be printed with further ink and/or varnish layers and/or provided with a surface structure.

## Revendications

1. Composition pour un revêtement superficiel de papier sans cellulose, de papier à base de cellulose, de papier avec revêtement thermoactivable et/ou substrats plastique **caractérisée en ce que** la composition du revêtement superficiel est conçue à base de dispersions de polymère d'acryle ou de dispersions de polymère d'acryle-styrène ou de dispersions de polyuréthanne ou d'acrylate de polyester, de dispersions de polymère d'acryle ou de dispersions de polymère d'acryle-styrène présentant une Tg de 20 - +100°C et une MFT de 0 - 100°C et la composition contenant en supplément une polyimine et la composition du revêtement superficiel étant appliquée dans au moins deux couches, la viscosité de la composition du revêtement superficiel étant comprise entre 25 et 500 mPa.sec et pouvant être différente dans les couches individuelles.

2. Composition selon la revendication 1, **caractérisée en ce que** la composition du revêtement superficiel est conçue à base de dispersions de polymère d'acryle anioniques ou de dispersions de polymère d'acryl-styrène ou de dispersions de polyuréthanne ou d'acrylate de polyester.

3. Composition selon la revendication 1 ou 2, **caractérisée en ce que** la composition contient 0,1 à 20 % en poids de la polyimine.

4. Composition selon l'une quelconque des revendications 1 à 3, **caractérisée en ce que** la composition contient un composé avec des hydroxyles terminaux.

5. Composition selon l'une quelconque des revendications 1 à 4, **caractérisée en ce que** la composition est durcissante au rayonnement, en particulier durcissante aux UV.

6. Composition selon l'une quelconque des revendications 1 à 5, **caractérisée en ce qu'**elle peut être imprimée avec d'autres couches de couleur et/ou de laque et peut être dotée d'une structure superficielle.

7. Composition selon l'une quelconque des revendications 1 à 6, **caractérisée en ce qu'**elle peut être appliquée sur du papier sans cellulose ou à base de cellulose, sur du papier avec revêtement thermoactivable, sur des substrats plastique, sur des substrats métalliques, sur des non-tissés ou des tissus dans tout procédé quelconque de laquage, de revêtement ou d'impression sur un substrat.

8. Composition selon l'une quelconque des revendications 3 à 7, **caractérisée en ce qu'**elle peut être appliquée sur un substrat, qui contient un composant réactif ou avec un revêtement qui contient un composant réactif.

9. Valeur mobilière, papier de billet de banque, papier avec revêtement thermoactivable, substrats plastique ou substrats métalliques dotés d'une ou plusieurs couches d'une composition selon l'une quelconque des revendications 1 à 8.

10. Valeur mobilière ou papier de billet de banque, papier avec revêtement thermoactivable, substrats plastique ou substrats métalliques selon la revendication 9, **caractérisé(e) en ce que** les couches individuelles de la composition présentent une composition identique ou différente.

11. Valeur mobilière, papier de billet de banque, papier avec revêtement thermoactivable, substrats plastique ou substrats métalliques selon l'une quelconque des revendications 9 ou 10, **caractérisé(e)** en ce que la valeur mobilière ou le papier de billet de banque ou le substrat plastique présente des caractéristiques de sécurité encastrées ou appliquées.

12. Valeur mobilière, papier de billet de banque, papier avec revêtement thermoactivable, substrats plastique ou substrats métalliques selon l'une quelconque des revendications 9 ou 11, **caractérisé(e)** en ce que le revêtement superficiel peut être imprimé avec d'autres couches de couleur et/ou de laque et/ou est doté d'une structure superficielle.
